(19) Europäisches Patentamt / European Patent Office / Office européen des brevets

(11) **EP 1 727 229 B1**

(12) **FASCICULE DE BREVET EUROPEEN**

(45) Date de publication et mention
de la délivrance du brevet:
**06.05.2009 Bulletin 2009/19**

(51) Int Cl.:
*H01M 10/34* (2006.01)     *H01M 4/24* (2006.01)
*H01M 4/38* (2006.01)

(21) Numéro de dépôt: **06290808.2**

(22) Date de dépôt: **18.05.2006**

(54) **Composition de matière active et accumulateur à électrolyte alcalin**

Aktivmaterial-Zusammensetzung und Akkumulator mit alkalischem Elektrolyten

Active material composition and alkaline electrolyte accumulator

(84) Etats contractants désignés:
**DE FR GB**

(30) Priorité: **26.05.2005 FR 0505304**

(43) Date de publication de la demande:
**29.11.2006 Bulletin 2006/48**

(73) Titulaire: **SAFT GROUPE SA**
**93170 Bagnolet (FR)**

(72) Inventeurs:
• **Bernard, Patrick**
**33000 Bordeaux (FR)**
• **Knosp, Bernard**
**92250 La Garenne Colombes (FR)**
• **Baudry, Michèle**
**33320 Eysines (FR)**

(74) Mandataire: **Hirsch & Associés**
**58, avenue Marceau**
**75008 Paris (FR)**

(56) Documents cités:
EP-A- 0 587 974     FR-A- 2 835 354
US-A- 5 547 784     US-A1- 2003 129 491
US-A1- 2004 134 569     US-B1- 6 248 475

• PATENT ABSTRACTS OF JAPAN vol. 2002, no. 03, 3 avril 2002 (2002-04-03) & JP 2001 325957 A (TOSHIBA BATTERY CO. LTD.), 22 novembre 2001 (2001-11-22)

• PATENT ABSTRACTS OF JAPAN vol. 2002, no. 03, 3 avril 2002 (2002-04-03) & JP 2001 316744 A (TOSHIBA BATTERY CO. LTD.), 16 novembre 2001 (2001-11-16)

• PATENT ABSTRACTS OF JAPAN vol. 2000, no. 04, 31 août 2000 (2000-08-31) & JP 2000 021398 A (TOSHIBA BATTERY CO. LTD.), 21 janvier 2000 (2000-01-21)

• PATENT ABSTRACTS OF JAPAN vol. 2000, no. 16, 8 mai 2001 (2001-05-08) & JP 2001 006666 A (SANYO ELECTRIC CO. LTD.), 12 janvier 2001 (2001-01-12)

• PATENT ABSTRACTS OF JAPAN vol. 2000, no. 15, 6 avril 2001 (2001-04-06) & JP 2000 340223 A (SANYO ELECTRIC CO. LTD.), 8 décembre 2000 (2000-12-08)

• PATENT ABSTRACTS OF JAPAN vol. 1998, no. 09, 31 juillet 1998 (1998-07-31) & JP 10 106550 A (MATSUSHITA ELECTRIC INDUSTRIAL CO. LTD.), 24 avril 1998 (1998-04-24)

• PATENT ABSTRACTS OF JAPAN vol. 1998, no. 05, 30 avril 1998 (1998-04-30) & JP 10 021908 A (YUASA CORP.), 23 janvier 1998 (1998-01-23)

• KAIYA H. ET AL.: "Improvement in cycle life performance of high capacity nickel-metal hydride battery" JOURNAL OF ALLOYS AND COMPOUNDS, vol. 231, 15 décembre 1995 (1995-12-15), pages 598-603, XP004077291 ISSN: 0925-8388

EP 1 727 229 B1

**Description**

DOMAINE TECHNIQUE

L'invention concerne une composition de matière active comprenant un alliage de type $AB_t$ avec $3,2 \leq t \leq 3,5$ et un composé à base d'yttrium. L'invention concerne aussi une anode comprenant ladite composition, et un accumulateur à électrolyte alcalin comprenant ladite anode. La capacité volumique, la puissance et la durée de vie dudit accumulateur sont améliorées.

ETAT DE LA TECHNIQUE

Les applications électriques et électroniques portables, telles que par exemple les outils sans fil, ont un besoin énergétique croissant. Un accumulateur alcalin comprenant une anode à base d'un métal hydrurable de type $AB_5$ et une cathode à base d'hydroxyde de nickel ne répond pas de manière satisfaisante à l'évolution de ce besoin énergétique. En effet, d'une part un alliage de type $AB_5$ possède une capacité limitée à 300-320 mAh/g et d'autre part, les tentatives pour optimiser la puissance d'un tel accumulateur montrent qu'il n'est pas possible d'augmenter sa puissance sans réduire sa capacité volumique. Or certaines applications électriques doivent être aptes à délivrer une forte puissance pendant plusieurs minutes en continu.

Dans le but d'améliorer la puissance de l'accumulateur nickel-métal hydrure, des traitements de surface de l'alliage hydrurable ont été proposés dans EP-A-0273625, EP-B-0645833, EP-A-0696823, EP-A-0820109 et EP-A-0945907. Ces traitements de surface sont des procédés de décapage (etching) acide ou alcalin de l'alliage hydrurable. Ils présentent l'inconvénient d'être coûteux et de réduire la capacité de l'alliage hydrurable.

Dans le but d'améliorer la capacité volumique, des compositions telles que les familles d'alliage $AB_2$ ont été étudiées. Toutefois, bien que leur capacité initiale soit plus importante que celle d'un alliage de type $AB_5$, leur puissance et leur durée de vie sont considérablement réduites.

Un alliage de type $A_2B_7$ est depuis peu disponible dans le commerce. Toutefois, bien que sa capacité initiale soit supérieure à celle d'un alliage $AB_5$ et comparable à celle d'un alliage $AB_2$, sa durée de vie est limitée.

Le document US-A-2004/0134569 décrit un alliage hydrurable, du type $AB_t$ avec $2,8 \leq t \leq 3,9$, pour accumulateur alcalin. Cet alliage a pour formule $Ln_{1-x}Mg_xNi_{y-a}Al_a$, dans laquelle Ln est au moins un élément choisi parmi les terres rares, $0,05 \leq x \leq 0,20$ ; $2,8 \leq y \leq 3,9$ et $0,10 \leq a \leq 0,25$. Il est précisé que l'élément de terres rares peut être l'yttrium, le scandium ou un lanthanide et que lorsque l'yttrium est employé, la durée de vie en cyclage de l'accumulateur est augmentée. Cependant l'yttrium est un élément coûteux.

Le document JP 2001-325957 (Abrégé) décrit une composition de matière active comprenant :

a) un alliage hydrurable de formule $Ln_{1-x}Mg_x(Ni_{1-y}T_y)_z$ dans laquelle :

- Ln est au moins un élément choisi dans le groupe comprenant les lanthanides, Ca, Sr, Sc, Y, Ti, Zr et Hf ;
- T est au moins un élément choisi dans le groupe comprenant Li, V, Nb, Ta, Cr, Mo, Mn, Fe, Co, Al, Ga, Zn, Sn, In, Cu, Si, P et B ; $0 < x < 1$ ; $0 \leq y \leq 0,5$ et $2,5 \leq z \leq 4,5$ ;

b) de 0,01 à 20 % en poids d'yttrium par rapport à la masse d'alliage.

Le document JP 2001-316744 (Abrégé) décrit un alliage hydrurable de formule $Ln_{1-x}Mg_x(Ni_{1-y}T_y)_z$ dans laquelle :

- Ln est au moins un élément choisi dans le groupe comprenant les lanthanides, Ca, Sr, Sc, Y, Ti, Zr et Hf; Ln comprenant de 10 à 50% d'atomes de lanthane ;
- T est au moins un élément choisi dans le groupe comprenant Li, V, Nb, Ta, Cr, Mo, Mn, Fe, Co, Al, Ga, Zn, Sn, In, Cu, Si, P et B ; $0,05 \leq x \leq 0,20$ ; $0 \leq y \leq 0,5$ et $2,8 \leq z \leq 3,9$.

Le document US 6 248 475 décrit un alliage hydrurable représenté par la formule générale suivante (A), et remplissant les conditions représentées par les formules (1) et (2),

$$(R_{1-x}Mg_x)Ni_yA_z \qquad (A)$$

où R est au moins un élément choisi parmi des éléments de terres-rares (y compris l'yttrium), Ca, Zr et Ti ;
A est au moins un élément choisi parmi Co, Mn, Fe, V, Cr, Nb, Al, Ga, Zn, Sn, Cu, Si, P et B, et x, y et z sont des ratio atomiques définis individuellement par $0 < x < 1$, $0 \leq z \leq 1,5$ ; $2,5 \leq y+z \leq 4,5$ ;

$$3,2 \leq P \leq 5,0 \ (1)$$

et

$$0,9 \leq Q \leq 0,2P+0,7 \ (2)$$

où P est la quantité (g) de l'alliage absorbant l'hydrogène par capacité théorique 1 Ah de l'électrode positive, et Q est la quantité (mL) d'électrolyte alcalin par capacité théorique 1 Ah de l'électrode positive.

Le document JP 2000-021398 (Abrégé) décrit un alliage hydrurable de formule $Ln_{1-x}Mg_x(Ni_{1-y}T_y)_z$, caractérisée par une surface spécifique inférieure ou égale à 0,7 m²/g, après absorption/désorption d'hydrogène dans des conditions spécifiques. Ln est au moins un élément choisi dans le groupe comprenant les lanthanides, Ca, Sr; Sc, Y, Ti, Zr et Hf ; T est au moins un élément choisi dans le groupe comprenant V, Nb, Ta, Cr, Mo, Mn, Fe, Co, Al, Ga, Zn, Sn, In, Cu, Si, P et B ; et $0<x\leq1$ ; $0\leq y\leq0,5$ ; $2,5\leq z\leq4,5$.

Le document US 2003/0129491 décrit un alliage hydrurable du type AB₅, additionné d'un hydroxyde et/ou d'un oxyde d'au moins un élément choisi dans le groupe comprenant le scandium, l'yttrium et les lanthanides.

Le document JP2001-006666 (Abrégé) décrit un alliage hydrurable contenant au moins de l'yttrium et du nickel, l'alliage possédant une région périphérique ayant subi un traitement de surface et une région de coeur recouverte par la région périphérique, où au moins la région périphérique contient de l'yttrium et/ou un composé d'yttrium, et le ratio du nombre d'atomes de nickel présents dans la région périphérique sur le nombre d'atomes de nickel dans la région de coeur est supérieur ou égal à 1,10.

Le document JP2000-340223 (Abrégé) décrit des particules d'un alliage hydrurable dont la surface présente des trous, et un composé d'yttrium déposé et fixé sur ces trous. Ledit composé d'yttrium est du chlorure d'yttrium présent en une quantité allant jusqu'à 5,0% en poids. L'alliage hydrurable a une structure cristalline de type CaCu₅, est représenté par la formule $MmNi_xCo_yMn_zM_{1-z}$ dans laquelle Mm est un mélange de terres rares ; M est Al ou Cu ; x est l'indice stoechiométrique du nickel avec $3,0\leq x\leq5,2$ ; y est l'indice stoechiométrique du cobalt avec $0\leq y\leq1,2$ ; z est l'indice stoechiométrique du manganèse avec $0,1\leq z\leq0,9$, et $4,4\leq x+y+z\leq5$.

Le document JP10-106550 (Abrégé) décrit le mélange d'un alliage hydrurable du type AB₅ comprenant un ou plusieurs éléments choisis parmi les lanthanides avec une dispersion aqueuse d'oxyde d'yttrium ou d'hydroxyde d'yttrium.

Le document JP10-021908 (Abrégé) décrit un alliage hydrurable de type AB₅ comprenant de l'ytterbium et de l'yttrium, tel que $Yb(OH)_3$ ou $Y(OH)_3$.

Le document US 5 547 784 décrit un mélange d'un alliage hydrurable de type AB₅ avec un composé d'yttrium choisi parmi Y, $Y_2O_3$, $Y(OH)_3$ et $Y_2(SO_4)_3$ ou un mélange de ceux-ci.

Le document « Journal of Alloys and Compounds » 231 (1995) 598-603 décrit l'addition d'un composé $Y_2O_3$ à un alliage hydrurable de type $MmNi_5$ où Ni est partiellement substitué par Al, Mn et Co. Il est dit que l'addition de $Y_2O_3$ améliore la résistance à la corrosion de l'alliage lorsque celui-ci est utilisé dans l'électrode négative d'un batterie rechargeable du type Ni-MH.

Le document EP-A-0 587 974 décrit un alliage hydrurable de type AB₅ possédant une pression d'équilibre en hydrogène réduite.

Le document FR-A-2 835 354 décrit un alliage hydrurable dont la surface est recouverte d'une couche protectrice constituée principalement d'un hydroxyde de nickel.

On recherche donc un accumulateur alcalin comportant une faible quantité d'yttrium et possédant néanmoins une capacité, une puissance et une durée de vie en cyclage élevées.

RESUME DE L'INVENTION

A cet effet, l'invention propose une composition de matière active comprenant :

a) un alliage hydrurable de formule $R_{1-y}Mg_yNi_{t-z}M_z$ dans laquelle
R représente La, éventuellement substitué par Nd et/ou Pr,
M représente au moins un élément choisi parmi Mn, Fe, Al, Co, Cu, Zr et Sn, $0,1\leq y\leq0,4$,
$3,2\leq t\leq3,5$,
$z\leq0,5$,
et dont la pression d'hydrogène en équilibre avec l'alliage, pour une insertion d'hydrogène dans l'alliage de 0,5H/Métal à 40°C, est inférieure à 0,7 bar,

b) un composé à base d'yttrium en mélange avec l'alliage a).

L'invention concerne aussi une anode comprenant ladite composition de matière active.

L'invention concerne aussi un accumulateur à électrolyte alcalin comprenant ladite au moins une anode.

BREVE DESCRIPTION DE LA FIGURE

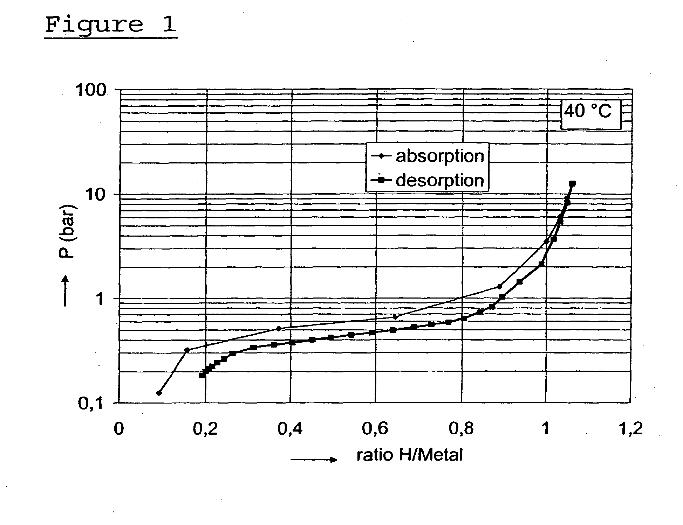

La Figure 1 représente une courbe isotherme Pression-Composition à 40°C d'un alliage hydrurable selon l'invention.

EXPOSE DETAILLE DE MODES DE REALISATION DE L'INVENTION

La composition de matière active selon l'invention comprend un alliage hydrurable de formule $R_{1-y}Mg_yNi_{t-z}M_z$ dans laquelle :

R représente La, éventuellement substitué par Nd et/ou Pr.
M représente au moins un élément choisi parmi Mn, Fe, Al, Co, Cu, Zr et Sn et $0,1 \leq y \leq 0,4$
$3,2 \leq t \leq 3,5$
$z \leq 0,5$

Selon un mode de réalisation préféré, $3,3 \leq t \leq 3,4$.

Selon un second mode de réalisation préféré, $0,05 \leq z \leq 0,25$.

Selon un troisième mode réalisation préféré, $0,2 \leq y$.

La composition de l'alliage peut être confirmée par analyse élémentaire par la technique de plasma inductif ou par la technique d'absorption atomique ou la technique de fluorescence des rayons X.

La pression d'hydrogène en équilibre avec l'alliage, pour une insertion d'hydrogène dans l'alliage de 0,5 H/Métal à 40°C, est inférieure à 0,7 bar. Le rapport H/Métal est le rapport entre le nombre de moles d'atomes d'hydrogène insérés dans l'alliage et le nombre de moles d'atomes de métal de l'alliage. On désigne par le terme « Métal », l'ensemble des métaux contenus dans l'alliage, c'est-à-dire R, Mg, Ni et M.

La pression d'hydrogène à l'équilibre à 40°C pour une insertion d'hydrogène de 0,5 H/Métal est mesurée à partir du tracé de la courbe isotherme de désorption d'hydrogène par l'alliage (Figure 1). La courbe de la Figure 1 représente la pression d'hydrogène en fonction du taux d'insertion de l'hydrogène dans l'alliage à 40°C. Elle est établie après 3 cycles d'activation (absorption et de désorption de l'hydrogène) de l'alliage et dégazage de l'hydrogène résiduel à 80°C.

Cette courbe présente une première partie à basse pression, où la pression varie rapidement en fonction de la concentration en hydrogène. Durant cette partie, l'hydrogène atomique est « soluble » dans l'alliage et diffuse progressivement à travers celui-ci. Ceci constitue une solution solide (désordonnée) d'hydrogène dans l'alliage. L'hydrure ne se forme pas encore.

Dans une deuxième partie, la courbe présente la forme d'un plateau légèrement incliné. Le début de ce plateau marque le début de la formation de l'hydrure (dans l'hydrure, l'hydrogène atomique occupe les sites d'insertion de l'alliage de manière ordonnée). Durant la phase de plateau, l'hydrogène atomique occupe progressivement tous les sites d'insertion de l'alliage. La fin du plateau correspond à la situation où pratiquement tous les sites d'insertion de l'alliage sont occupés par l'hydrogène.

Dans une troisième partie, la pression d'hydrogène augmente à nouveau rapidement avec la concentration en hydrogène et la quantité d'hydrogène que peut encore insérer l'alliage augmente peu. L'alliage se trouve alors uniquement sous la forme de l'hydrure dans lequel l'hydrogène atomique excédentaire est inséré de manière désordonnée. On peut déterminer sur l'axe des abscisses la position du rapport H/Métal égal à 0,5 et en déduire la valeur de la pression à l'équilibre par lecture de l'ordonnée du point correspondant de la courbe de désorption.

La désorption d'hydrogène se produit à une pression de plateau inférieure à la pression d'absorption.

La pression de plateau d'hydrogène n'est pas inhérente à la composition de l'alliage hydrurable mais à la composition de la phase qui absorbe l'hydrogène. Or, pour une même composition d'alliage, des modes d'élaboration différents, notamment des traitements thermiques différents, peuvent conduire à l'obtention d'un alliage monophasé ou d'un alliage multiphasé dont la composition d'aucune des phases n'est identique à celle de l'alliage.

Selon un mode de réalisation préféré, la pression d'hydrogène, pour une insertion d'hydrogène dans l'alliage de 0,5 H/Métal, est inférieure à 0,45 bar.

La pression d'hydrogène inférieure à 0,7 bar à 40°C est compatible avec le fonctionnement en accumulateur étanche.

Selon un mode de réalisation, la taille des particules d'alliage hydrurable est caractérisée par un Dv 50% de

**4**

30 à 120 μm, de préférence de 50 à 100 μm.

Selon un autre mode de réalisation, la taille des particules d'alliage hydrurable est caractérisée par un Dv 50% de 120 à 200 μm.

Le mélange de l'alliage avec un composé à base d'yttrium a pour effet d'augmenter la capacité restituée en décharge par l'élément. En particulier, cet effet se manifeste aussi dans le cas de décharges sous fort courant (décharges au régime de 5C).

Le mélange de l'alliage avec un composé à base d'yttrium a également pour effet d'augmenter la durée de vie en cyclage de l'anode.

Le composé à base d'yttrium est choisi dans une liste non exhaustive comprenant un oxyde à base d'yttrium tel que $Y_2O_3$, un hydroxyde à base d'yttrium tel que $Y(OH)_3$ ou un sel à base d'yttrium. De préférence, le composé à base d'yttrium est l'oxyde d'yttrium $Y_2O_3$.

Le composé à base d'yttrium est mélangé à l'alliage en une proportion telle que la masse d'yttrium représente de 0,1 à 2 % de la masse de l'alliage, de préférence de 0,2 à 1 % de la masse d'alliage, de préférence encore de 0,2 à 0,7 % de la masse de l'alliage.

Le procédé d'ajout du composé à base d'yttrium à la matière active durant la fabrication de l'anode est simple à mettre en oeuvre industriellement. Il ne nécessite pas de dispositifs complexes. Ainsi qu'on peut le constater, la solution selon l'invention est effectivement très simple et/ou ne présente pas de surcoût notable.

L'invention concerne aussi une anode comprenant ladite composition de matière active.

L'anode est fabriquée en empâtant un support avec une pâte constituée d'un mélange aqueux de la composition de matière active selon l'invention, d'additifs, de liants et d'agents conducteurs.

Le support peut être une mousse de nickel, un feuillard perforé plan ou tridimensionnel en nickel ou en acier nickelé.

Les additifs sont destinés à faciliter la mise en oeuvre ou les performances de l'anode. Ils peuvent être des épaississants tels que la carboxyméthylcellulose (CMC), l'hydroxypropylméthylcellulose (HPMC), le polyacideacrylique (PAAc), le poly(éthylèneoxyde) (PEO). Ils peuvent aussi être des liants tels que les copolymères de butadiène-styrène (SBR), le polystyrène acrylate (PSA), le polytétrafluoroéthylène (PTFE). Ils peuvent aussi être des agents conducteurs tels que de la poudre de nickel, de la poudre ou des fibres de carbone, des nanotubes.

Avantageusement, l'anode est recouverte d'une couche de surface destinée à améliorer la décharge à régime élevé et/ou la recombinaison de l'oxygène en fin de charge.

L'invention concerne aussi un accumulateur à électrolyte alcalin comprenant au moins une anode selon l'invention.

Cet accumulateur comprend typiquement ladite au moins une anode, au moins une cathode au nickel, au moins un séparateur et un électrolyte alcalin.

La cathode est constituée de la masse active cathodique déposée sur un support qui peut être un support fritté, une mousse de nickel, un feuillard perforé plan ou tridimensionnel en nickel ou en acier nickelé.

La masse active cathodique comprend la matière active cathodique et des additifs destinés à faciliter sa mise en oeuvre ou ses performances. La matière active cathodique est un hydroxyde de nickel $Ni(OH)_2$ qui peut être partiellement substitué par Co, Mg et Zn. Cet hydroxyde peut être revêtu d'une couche de surface à base de composés du cobalt et peut être partiellement oxydé.

Parmi les additifs, on peut citer, sans que cette liste soit exhaustive, la carboxyméthylcellulose (CMC), l'hydroxypropylméthylcellulose (HPMC), l'hydroxypropylcellulose (HPC), l'hydroxyéthylcellulose (HEC), le polyacideacrylique (PAAc), le polystyrène maléique anhydride (SMA), les copolymères de butadiène-styrène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polystyrène acrylate (PSA), le polytétrafluoroéthylène (PTFE), un copolymère fluoré d'éthylène et de propylène (FEP), le polyhexa-fluoropropylène (PPHF), l'éthylvinylalcool (EVA), l'oxyde de zinc ZnO, des fibres (Ni, C, polymères), des poudres de composés à base de cobalt tels que Co, $Co(OH)_2$, CoO, $Li_xCoO_2$, $H_xCoO_2$, $Na_xCoO_2$.

Le séparateur est généralement composé de fibres en polyoléfine (par ex. polypropylène) ou polyamide poreux non-tissé.

L'électrolyte est une solution aqueuse alcaline concentrée comprenant au moins un hydroxyde (KOH, NaOH, LiOH), en une concentration généralement de l'ordre de plusieurs fois la normalité.

De façon classique on prépare les pâtes pour électrodes, on fabrique les électrodes, puis on superpose au moins une cathode, un séparateur et une anode afin de constituer le faisceau électrochimique. On introduit le faisceau électrochimique dans un godet conteneur et on l'imprègne avec un électrolyte alcalin aqueux. On ferme ensuite l'accumulateur.

L'invention concerne tout format d'accumulateurs : format prismatique (électrodes planes) ou format cylindrique (électrodes spiralées ou concentriques).

L'accumulateur selon l'invention peut être du type ouvert (ouvert ou semi-ouvert) ou du type étanche.

L'accumulateur selon l'invention est particulièrement bien adapté comme source d'énergie pour un véhicule électrique ou un appareil portable.

D'autres caractéristiques et avantages de la présente invention apparaîtront à la lecture des exemples.

EXEMPLES

Des alliages a à j de formule $R_{1-y}Mg_yNi_{t-z}M_z$ de différentes compositions ont été élaborés par un procédé de refroidissement rapide et recuits à des températures comprises entre 825 et 1100°C pour des durées comprises entre 1 h et 5h.

Les compositions des alliages a à j sont indiquées dans le Tableau 1.

Les valeurs de la pression d'hydrogène en équilibre avec l'alliage pour 0,5H/Métal à 40°C et les valeurs de la capacité en réaction solide-gaz sous 10 bar d'hydrogène, déduites des courbes PCT, figurent pour chaque alliage dans le Tableau 1.

La capacité en réaction solide-gaz indique le pourcentage en masse d'hydrogène que l'alliage peut absorber.

TABLEAU 1

| Composition et caractéristiques des alliages. | | | | | | | | | | | |
|---|---|---|---|---|---|---|---|---|---|---|---|
| **Alliage** | **La** | **Ce** | **(Nd,Pr)** | **Mg** | **Ni** | **Co** | **Al** | **Mn** | **t** | **Capacité+ en réaction solide-gaz** | **Pression* de plateau (bar)** | **Capacité électrochimique (mAh/g)\*\*** |
| AB$_5$ (référence) | 0,32 | 0,48 | 0,20 | | 3,60 | 0,70 | 0,3 | 0,4 | 5,02 | 1,25 | 0,45 | 295 |
| a | 0,7 | | 0 | 0,3 | 2,80 | 0,50 | 0 | 0 | 3,30 | 1,50 | <0,2 | 360 |
| b | 0,71 | | 0 | 0,29 | 2,85 | 0,50 | 0 | 0 | 3,35 | 1,51 | 0,21 | 368 |
| c | 0,70 | | 0 | 0,30 | 3,28 | 0 | 0 | 0 | 3,28 | 1,47 | 0,27 | 362 |
| d | 0,71 | | 0 | 0,29 | 3,44 | 0 | 0 | 0 | 3,44 | 1,54 | 0,43 | 358 |
| e | 0 | | 0,70 | 0,30 | 3,27 | 0 | 0 | 0 | 3,27 | 1,26 | 3,8 | non mesuré |
| f | 0,42 | | 0,30 | 0,29 | 3,32 | 0 | 0 | 0 | 3,32 | 1,48 | 0,81 | 124 |
| g | 0,42 | | 0,30 | 0,29 | 3,10 | 0 | 0 | 0,25 | 3,35 | 1,43 | <0,2 | 336 |
| h | 0,42 | | 0,30 | 0,29 | 3,10 | 0 | 0,25 | 0 | 3,35 | 1,23 | 0,26 | 287 |
| i | 0,55 | | 0,15 | 0,29 | 3,44 | 0 | 0 | 0,05 | 3,49 | 1,5 | 0,72 | 89 |
| j | 0,65 | | 0,05 | 0,29 | 3,20 | 0 | 0 | 0 | 3,20 | 1,42 | <0.2 | 371 |

+ Capacité sous 10 Bar d'H$_2$ exprimée en % massique

* Pression d'équilibre d'hydrogène en désorption à 40°C et 0,5 H/M

\*\* Capacité mesurée au cycle 3

Le tableau 1 montre que l'alliage e, pour lequel le lanthane a été totalement remplacé par Nd et Pr (avec Nd/Pr voisin de 3), présente une pression de plateau en désorption de 3,8 bar à 40°C, ce qui est incompatible avec un fonctionnement étanche. En effet, dans un accumulateur délivrant une forte puissance, le courant et donc l'effet Joule est élevé ce qui conduit à ce que la température de l'accumulateur soit supérieure à 40°C. Si la pression d'hydrogène est de 3,8 bar, la pression interne de l'accumulateur sera élevée, ce qui conduit à une ouverture de la soupape de sécurité du conteneur de l'accumulateur et à des fuites prématurées.

La capacité en réaction solide-gaz des alliages **a, b, c, d, g, h** et **j** selon l'invention est en moyenne de 1,44 %. Ceci représente une augmentation d'environ 15% par rapport à la capacité en réaction solide-gaz de l'alliage $AB_5$ de référence qui n'est que de 1,25%.

Dans une première série de tests, les capacités électrochimiques massiques des alliages **a** à **j** ont été mesurées. La capacité massique des alliages a été déterminée en élément prismatique de laboratoire dont la capacité est limitée par l'anode.

Des anodes comprenant les alliages **a** à **j** ont été fabriquées. Elles sont constituées de :

- 65 % (en poids) de l'alliage réduit en poudre dont la granulométrie est caractérisée par un $D_v$ 50% correspondant à une taille de 32 μm
- 30 % (en poids) de poudre de nickel comme composé conducteur
- 5 % de PTFE comme liant

La cathode comprend un collecteur de courant de type mousse de nickel standard et une matière active constituée d'un hydroxyde de nickel partiellement substitué par Zn et Co, dont le réseau conducteur constitué de Co $(OH)_2$ a été préalablement formé.

L'anode et la cathode sont séparées par un séparateur en polyoléfine et une membrane destinée à empêcher une éventuelle recombinaison d'oxygène dégagé à la cathode sur l'anode. Durant la période d'activation, l'alliage est cyclé dans les conditions suivantes :

- Charge de 16 h à un régime de 30 mA/g
- Repos de 1 h
- Décharge à 60 mA/g, tension d'arrêt de 0,9 V.

Les capacités déchargées au cycle 3 par les différents alliages sont rassemblées dans le tableau 1.

Compte tenu de la pression élevée d'hydrogène, l'alliage e n'a pas été évalué.

L'examen de ce tableau montre clairement que les alliages dont la pression en désorption pour 0,5H/Métal à 40°C est supérieure à 0,7 bar (alliages f et i), présentent des capacités électrochimiques très faibles, inférieures à 150 mAh/g.

Les alliages **a, b, c, d, g, h** et **j** selon l'invention, dont la pression en désorption pour 0,5H/Métal à 40°C est inférieure à 0,7 bar présentent une capacité électrochimique moyenne d'environ 350 mAh/g. Ceci représente une augmentation de la capacité électrochimique de 18% par rapport à la capacité électrochimique de l'alliage $AB_5$ de référence, qui n'est que de 295 mAh/g.

On constate Tableau 1 que les alliages **c, d, g, h** et **j**, qui ne comportent pas de cobalt, présentent cependant une capacité comparable à celle des alliages **a** et **b** comportant du cobalt. Un avantage supplémentaire de l'invention est donc de fournir un alliage hydrurable sans cobalt présentant une capacité élevée. En effet, le cobalt a l'inconvénient d'être un élément coûteux.

Dans une seconde série de tests, des accumulateurs étanches comprenant une anode comprenant les alliages **b, c, d, g** et **j** ont été réalisés. Ces accumulateurs ont un format cylindrique Cs (ou Sub C) correspondant à un diamètre extérieur d'environ 22,5 mm et une hauteur voisine de 43 mm. La capacité de ces accumulateurs est de 3,2 Ah.

La pâte de l'anode est constituée d'un mélange aqueux de la poudre d'alliage selon l'invention en une proportion supérieure à 98 % en poids, de CMC (épaississant), de SBR (liant) et de carbone (conducteur). Toutes les électrodes sont découpées aux mêmes dimensions.

Le composé à base d'yttrium a été ajouté sous forme d'oxyde d'yttrium $Y_2O_3$ à la proportion massique de 0,5 % d'yttrium par rapport à la masse d'alliage hydrurable.

La cathode est une électrode mousse standard de nickel contenant un hydroxyde à base de nickel et $Co(OH)_2$ comme composé conducteur.

Le faisceau électrochimique constitué de la cathode, du séparateur et de l'anode, est spiralé et introduit dans un godet conteneur. Les éléments de connectique sont ensuite montés. Le faisceau est imprégné d'électrolyte 9 N qui est un mélange ternaire de KOH, NaOH et LiOH.

Les accumulateurs subissent d'abord 3 cycles constitués :

- d'une charge de 16 h sous 0,3 A,
- d'un repos d'une heure,
- d'une décharge sous 0,6 A, la tension d'arrêt étant de 0,9 V.

Des mesures de performances en décharge sous un courant de C et de 15 A sont ensuite réalisées de la façon suivante : les accumulateurs sont chargés à C/10 pendant 16 heures, puis ils sont déchargés au régimes de C et de 15 A jusqu'à une tension de 0,9 V. Les capacités en décharge sont mesurées. Elles sont indiquées dans le tableau 2. Ce tableau montre que l'accumulateur 4 dont l'anode comprend un alliage selon l'invention mais pas d'oxyde d'yttrium présente une capacité inférieure à 3 Ah au régime de C et inférieure à 2,9 Ah au régime de 15 A (soit environ 5C), contrairement aux accumulateurs 2, 3, 5, 6, 7, 8 et 9 dont l'anode contient l'alliage de l'invention et de l'oxyde d'yttrium.

TABLEAU 2

| Capacités déchargées en fonction du régime de décharge | | | | | | | | | |
|---|---|---|---|---|---|---|---|---|---|
| Accumulateur | 1 | 2 | 3 | 4 | 5 | 6 | 7 | 8 | 9 |
| Alliage | $AB_5$ | b | c | c | c | c | d | g | j |
| $Y_2O_3$ (Y/Alliage = 0,5 % masse) | oui | oui | oui | non | oui | oui | oui | oui | oui |
| Dv50% ($\mu$m) | 32 | 32 | 32 | 32 | 65 | 150 | 32 | 32 | 32 |
| Capacité déchargée sous un courant de C (Ah) | 3,15 | 3,23 | 3,20 | 2,88 | 3,22 | 3,17 | 3,27 | 3,15 | 3,24 |
| Capacité déchargée sous un courant de 15 A (Ah) | 2,81 | 3,06 | 2,98 | 2,57 | 2,97 | 2,70 | 3,04 | 2,94 | 3,03 |

Enfin, ces éléments de format Cs ont subi un cyclage prolongé constitué :

- d'une charge de 2 h 45 min au régime de C/3,
- d'un repos de 15 minutes,
- d'une décharge au régime de C jusqu'à 0,9 V, et
- d'un repos de 30 min.

Périodiquement, la capacité est mesurée au cours d'un cycle de référence constitué :

- d'une charge de 16 h à C/10,
- d'un repos d'une heure,
- d'une décharge au régime de C/5 jusqu'à 0,9 V.

La durée de vie correspondant à une perte de capacité de 20 % a été déterminée. Elle est rapportée dans le tableau 3.

TABLEAU 3

| Durée de vie correspondant à une perte de capacité de 20% | | | | | | | | | |
|---|---|---|---|---|---|---|---|---|---|
| Accumulateur | 1 | 2 | 3 | 4 | 5 | 6 | 7 | 8 | 9 |
| Alliage | $AB_5$ | b | c | c | c | c | d | g | J |
| $Y_2O_3$ (Y/Alliage = 0,5 % masse) | oui | oui | oui | non | oui | oui | oui | oui | oui |
| Dv50% ($\mu$m) | 32 | 32 | 32 | 32 | 65 | 150 | 32 | 32 | 32 |
| Durée de vie (cycles) | 32 | 288 | 308 | 147 | 347 | 372 | 283 | 312 | 292 |

On remarque la très faible durée de vie de l'accumulateur comprenant un alliage de type $AB_5$. De plus, lorsque l'anode ne contient pas d'yttrium, on note que la durée de vie est réduite, comparativement aux accumulateurs dont l'anode contient de l'oxyde d'yttrium. Enfin on remarque une amélioration de la durée de vie lorsque la granulométrie (DV$_{50\%}$) passe de 32 $\mu$m à 65 $\mu$m puis à 150 $\mu$m. Toutefois, comme indiqué au tableau 2, l'accumulateur 6 dont l'anode comprend un alliage de granulométrie 150 $\mu$m et de l'oxyde d'yttrium présente une capacité inférieure à 2,9Ah au régime de 15 A.

Ces exemples doivent être considérés comme ayant été présentés à titre illustratif et non restrictif, et l'invention n'est pas censée être limitée aux détails fournis ici mais peut être modifiée en restant dans le cadre de la portée des revendications annexées.

**Revendications**

1. Composition de matière active comprenant :

   a) un alliage hydrurable de formule R$_{1-y}$Mg$_y$Ni$_{t-z}$M$_z$ dans laquelle
   R représente La, éventuellement substitué par Nd et/ou Pr,
   M représente au moins un élément choisi parmi Mn, Fe, Al, Co, Cu, Zr et Sn,
   $0,1 \leq y \leq 0,4$,
   $3,2 \leq t \leq 3,5$,
   $z \leq 0,5$,
   et dont la pression d'hydrogène en équilibre avec l'alliage, pour une insertion d'hydrogène dans l'alliage de 0,5H/Métal à 40°C, est inférieure à 0,7 bar,
   b) un composé à base d'yttrium en mélange avec l'alliage a).

2. Composition selon la revendication 1, dans laquelle $3,3 \leq t \leq 3,4$.

3. Composition selon la revendication 1 ou 2, dans laquelle $0,05 \leq z \leq 0,25$.

4. Composition selon la revendication 1, 2 ou 3, dans laquelle $0,2 \leq y$.

5. Composition selon l'une des revendications 1 à 4, dans laquelle la pression d'hydrogène est inférieure à 0,45 bar.

6. Composition selon l'une des revendications précédentes, dans laquelle la masse d'yttrium représente de 0,1 à 2 % de la masse de l'alliage, de préférence de 0,2 à 1 % de la masse de l'alliage, de préférence encore de 0,2 à 0,7 % de la masse de l'alliage.

7. Composition selon l'une des revendications précédentes, dans laquelle le composé à base d'yttrium est choisi parmi un oxyde, un hydroxyde ou un sel à base d'yttrium.

8. Composition selon la revendication 7, dans laquelle le composé à base d'yttrium est l'oxyde d'yttrium Y$_2$O$_3$.

9. Composition selon l'une des revendications précédentes, dans laquelle la taille des particules d'alliage hydrurable est **caractérisée par** un Dv 50% de 30 à 120 $\mu$m, de préférence de 50 à 100 $\mu$m.

10. Composition selon l'une des revendications 1 à 8, dans laquelle la taille des particules d'alliage hydrurable est **caractérisée par** un Dv 50% de 120 à 200 $\mu$m.

11. Anode comprenant une composition de matière active selon l'une des revendications précédentes.

12. Accumulateur à électrolyte alcalin comprenant au moins une anode selon la revendication 11.

**Claims**

1. An active material composition comprising:

   a) an alloy capable of forming a hydride, of formula R$_{1-y}$Mg$_y$Ni$_{t-z}$M$_z$ in which
   R is La, optionally substituted by Nd and/or Pr.
   M is at least one element chosen from the group comprising Mn, Fe, Al, Co, Cu, Zr and Sn.
   $0.1 \leq y \leq 0.4$.

3.2≤t≤3.5.

z≤0.5.

and of which the equilibrium hydrogen pressure with the alloy, for a hydrogen insertion into the alloy of 0.5 H/Metal at 40°C. is less than 0.7 bar.

b) a yttrium-based compound in a mixture with alloy a).

2. The composition according to claim 1, wherein 3.3≤t≤3.4.

3. The composition according to claim 1 or 2, wherein 0.05≤z≤0.25.

4. The composition according to claim 1, 2 or 3, wherein 0.2≤y.

5. The composition according to one of claims 1 to 4, wherein hydrogen pressure is less than 0.45 bar.

6. The composition according to one of the preceding claims, wherein the weight of yttrium makes up from 0.1 to 2 % of the weight of said alloy, preferably from 0.2 to 1 % of the weight of said alloy, and even more preferably from 0.2 to 0.7 % of the weight of said alloy.

7. The composition according to one of the preceding claims, wherein the yttrium-based compound is selected from the group comprising a yttrium oxide, hydroxide or a yttrium-based salt.

8. The composition according to claim 7, wherein the yttrium-based compound is yttrium oxide $Y_2O_3$.

9. The composition according to one of the preceding claims, wherein particle sizes of the alloy capable of forming a hydride is **characterized by** a Dv 50% of from 30 to 120 $\mu$m, preferably from 50 to 100 $\mu$m.

10. The composition according to one of claims 1 to 8, wherein particle sizes of the alloy capable of forming a hydride is **characterized by** a Dv 50% of from 120 to 200 $\mu$m.

11. An anode comprising an active material composition according to one of the preceding claims.

12. An alkaline electrolyte storage battery comprising at least one anode according to claim 11.

**Patentansprüche**

1. Zusammensetzung von Aktivmaterial, umfassend:

a) eine hydridierbare Legierung, mit der Formel

$$R_{1-y}Mg_yNi_{1-z}M_z,$$

wobei

- R für La steht, das gegebenenfalls mit Nd und/oder Pr substituiert ist,
- M für mindestens ein Element steht, ausgewählt aus Mn, Fe, Al, Co, Cu, Zr und Sn,
- $0,1 \leq y \leq 0,4$,
- $3,2 \leq t \leq 3,5$,
- $z \leq 0,5$,

und der Wasserstoffdruck in Gleichgewichts mit der Legierung, für eine Einführung von Wasserstoff in die Legierung von 0,5 H/Metall bei 40°C, geringer als 0,7 Bar ist,

b) eine Verbindung die Yttrium beinhaltet in einem Gemisch mit der Legierung a).

2. Zusammensetzung nach Anspruch 1, wobei $3,3 \leq t \leq 3,4$.

3. Zusammensetzung nach Anspruch 1 oder 2, wobei $0,05 \leq z \leq 0,25$.

**4.** Zusammensetzung nach Anspruch 1, 2 oder 3, wobei $0,2 \leq y$.

**5.** Zusammensetzung nach einem der Ansprüche 1 bis 4, wobei der Wasserstoffdruck niedriger als 0,45 Bar ist.

**6.** Zusammensetzung nach einem der vorhergehenden Ansprüche, wobei die Yttriummasse 0,1 bis 2 Masse-% der Legierung, vorzugsweise 0,2 bis 1 Masse-% der Legierung, bevorzugt 0,2 bis 0,7 Masse-% der Legierung darstellt.

**7.** Zusammensetzung nach einem der vorhergehenden Ansprüche, wobei die Verbindung auf der Basis von Yttrium aus einem Oxid, einem Hydroxid oder einem Salz auf der Basis von Yttrium ausgewählt ist.

**8.** Zusammensetzung nach Anspruch 7, wobei die Verbindung die Yttrium beinhaltet Yttriumoxid $Y_2O_3$ ist.

**9.** Zusammensetzung nach einem der vorhergehenden Ansprüche, wobei die Teilchengröße der hydrierbaren Legierung durch einen Dv 50 % von 30 bis 120 μm, bevorzugt von 50 bis 100 μm **gekennzeichnet** ist.

**10.** Zusammensetzung nach einem der Ansprüche 1 bis 8, wobei die Teilchengröße der hydrierbaren Legierung durch einen Dv 50 % von 120 bis 200 μm **gekennzeichnet** ist.

**11.** Anode, die eine Aktivmaterial-Zusammensetzung nach einem der vorhergehenden Ansprüche umfasst.

**12.** Akkumulator mit alkalischem Elektrolyten, der mindestens eine Anode nach Anspruch 11 umfasst.

## Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0273625 A
- EP 0645833 B
- EP 0696823 A
- EP 0820109 A
- EP 0945907 A
- US 20040134569 A
- JP 2001325957 A
- JP 2001316744 A
- US 6248475 B
- JP 2000021398 A
- US 20030129491 A
- JP 2001006666 A
- JP 2000340223 A
- JP 10106550 A
- JP 10021908 A
- US 5547784 A
- EP 0587974 A
- FR 2835354 A

**Littérature non-brevet citée dans la description**

- *Journal of Alloys and Compounds,* 1995, vol. 231, 598-603